# EUROPEAN PATENT SPECIFICATION

(11) **EP 3 493 531 B1**
(45) Date of publication and mention of the grant of the patent: **13.04.2022**
(21) Application number: 17204913.2
(22) Date of filing: 01.12.2017
(51) Int. Cl.: H04N 5/60, H04N 5/63, H04N 21/439, H04N 21/443

(54) **CONTROL DEVICE FOR USE IN AN ELECTRONIC APPARATUS**
STEUERUNGSVORRICHTUNG ZUR VERWENDUNG IN EINER ELEKTRONISCHEN EINRICHTUNG
DISPOSITIF DE COMMANDE DESTINÉ À ÊTRE UTILISÉ DANS UN APPAREIL ÉLECTRONIQUE

(43) Date of publication of application: 05.06.2019
(73) Proprietor: Vestel Elektronik Sanayi ve Ticaret A.S., 45030 Manisa (TR)
(72) Inventor: Dikici, Alihan, 45030 Manisa (TR)
(74) Representative: Hermann, Felix

(56) References cited:
- KR-A- 20060 004 743
- US-B2- 8 638 394

## Description

### TECHNICAL FIELD

The invention relates, *inter alia,* to a control device for use in an electronic apparatus, such as a television, which is able to receive and process input signals during standby state of the electronic apparatus.

### TECHNCIAL BACKGROUND

US 8,638,394 B2 shows a television (TV) comprising an information display module which displays output information, such as volume information, channel information or the like, in a standby state of the television. During the standby state of the television, the displayed information on the information display module may be changed via a remote control operated by a user. The television disclosed in US 8,638,394 B2 also allows the user to operate the volume mute button on the remote control before startup, which means in the standby state of the television. As a consequence, a central processing unit of the television issues an instruction to change the displayed information on the information display, for example from "volume 30 dB" to "volume 0 dB" or "mute", and when the television is started (powered on) the television outputs audio with volume 0 dB (mute) via its speakers. Such a standby television output control generally addresses the problem of undesired high volume audio outputs when starting the television due to a high level of audio output when switching the television into the standby state.

However, the described solution requires the additional information display module to inform the user of the current respectively the last set audio volume. This arrangement requires additional power supply and increases a frame surface surrounding a television display. In modern televisions, the frame surface should be as small as possible. Further, the central processing unit which controls the television (including the processing of the commands from the remote control and the display module) has to be turned on permanently in order to receive the users' instructions, which leads to an increased power consumption of the television and therefore to higher electricity costs.

US 9,591,354 B2 relates to a television volume control system according to which a television performs a mutely turn-on mode after receiving a turn on instruction. The television is turned on mutely with an output volume level of 0dB when a user input instruction or a user's presetting is identified and when a system time, relating to a daytime, is within a preset time period indicative of the mutely turn on mode. Therefore, the system of US 9,591,354 B2 requires means for determining a current system time and for comparing the determined system time with the preset rest time, which requires additional power supply. Also, a central control unit requires constant power supply in order to process and handle the users' instructions also in standby state which further increases the power consumption of the television.

Document KR 2006 0004743 A (LG ELECTRONICS INC) discloses a mute-in-standby function.

It is an object of the present invention to overcome the above-mentioned disadvantages of the state of the art. One object of the invention is to provide a control device for use in an electronic apparatus which allows a user to configure the electronic device in standby state to restart in mute mode (mute-in-standby function).

### SUMMARY

It is an object of the present invention to overcome the above-mentioned disadvantages of the state of the art. One object of the invention is to provide a control device for use in an electronic apparatus which allows a user to configure the electronic device in standby state to restart in mute mode (mute-in-standby function) using an implementation that facilitates reducing power consumption and/or is simple in structure.

This object is solved by the subject matter of the independent claims. Advantageous embodiments are subject to the dependent claims.

One aspect of the invention is the idea of saving energy in standby state of an electronic apparatus by powering as few components thereof as possible. An electronic apparatus commonly comprises different interconnected control circuits which need to be powered to be operational. These control circuits commonly comprise one or more circuits that control the output of audio/sound (and sound volume). The sound volume is sometimes also referred to as sound intensity, loudness or sound level herein.

According to an aspect of the invention, only a standby controller circuitry needs to be powered in a standby state of the electronic apparatus to implement a mute-in-standby function (i.e. other control circuitry conventionally required to process user input and/or control sound output (and muting) do not need to be powered in standby state so as to save power), so as to allow muting the apparatus in standby state so that the apparatus is muted (e.g. does not output any sound signal) when being turned on, i.e. the apparatus is switched from the standby state to an active state.

For example, in standby mode, the standby controller circuitry asserts in response to a mute command, a control signal to the logic circuitry that causes the logic circuitry to output a "disable signal" (e.g. a logic "low"/0 signal) to a sound controller circuitry when the electronic apparatus enters from standby state to active state so as to prevent sound/audio output from the sound controller. For this, the standby controller circuitry may - in standby state - assert a logic "low"/0 signal to an input of the logic circuitry so that the logic circuitry - when powered - outputs a logic "low"/0 according to the AND function, irrespective of any other input signal provided to the logic circuitry from other control circuitry, e.g. from a main controller (or main processing unit) or the like. This logic "low"/0 signal output from the logic circuitry may for example disconnect the sound controller from a power supply, may disable the sound controller or may cause the sound controller to mute the output by setting the sound volume to zero (0 dB) or not outputting any sound signal.

In an embodiment of the invention, a control device for use in an electronic apparatus, such as a television, is provided. The control device comprises standby controller circuitry and sound controller circuitry comprising a sound controller. The sound controller may denote one or more components/circuits that control and/or cause the generation and output of a sound/audio signal, in particular, that control the sound volume. Optionally, the electronic apparatus may also comprise a speaker of that is connected to the sound controller to output sound/audio.

Further, logic circuitry is connected to the standby controller circuitry and the sound controller circuitry and provides an AND function. According to the claimed invention, the logic circuitry providing the AND function is realized by a logic AND gate. Alternatively, the AND function can also be realized by a NAND gate combined with an inverter. In principle, it is also possible to use a combination of at least two logic gates. The logic circuitry has inputs and performs a Boolean AND function, the result of which being output at an output of the logic circuitry. The output of the logic circuitry is thus only at a logic "high"/1 level, if all its inputs receive signals at logic "high"/1 level. Logic gates may be for example implemented using diodes or transistors acting as electronic switches.

The control device is operable in an active state in which the standby controller circuitry, the sound controller circuitry, and the logic circuitry (and also potential further circuitry of the control device and/or electronic apparatus) are powered by a power source. The control device may have its own power supply, but may alternatively also use the power supply of the electronic apparatus. The control device is further operable in a standby state in which the standby controller circuitry is powered by the power source, whereas the sound controller circuitry and optionally also the logic circuitry are not powered by the power source. Optionally, the logic circuitry may also be powered in standby state and active state (assuming that its power consumption is neglectable). Hence, in standby state, the sound controller circuitry which would conventionally control the sound intensity and output does not need to be powered, as the mute command can be processed in the standby controller.

In standby state, the standby controller circuitry may receive a mute command (e.g. a mute signal) and, responsive to the mute command, assert a muting control signal to the logic circuitry. The mute signal may for example be triggered via a remote control or via an input, e.g. a mute switch, arranged at the electronic device.

The logic circuitry, if the muting control signal is asserted by the standby controller circuitry, outputs a disable signal to the sound controller circuitry to prevent the sound controller from outputting a sound signal when entering into active state. The logic circuitry performs an AND function taking the muting control signal as one of the inputs to the AND function in order to cause the sound controller circuitry to output a disable signal irrespective of preset audio settings (or volume) or further input signals to the AND function provide by other control circuitry. In an example embodiment of the invention, when the sound controller circuitry receives a disable signal, a speaker of the electronic apparatus is not actuated by the sound controller when switching from the standby state to the active state, which means that no audio or sound output by the electronic apparatus occurs.

In an example embodiment of the invention, the standby controller circuitry may maintain the asserted muting control signal in active state. When switching from standby state to active state, the standby controller circuitry may maintain the muting control signal also in active state, so that when the logic circuitry is powered, the muting control signal is provided as an input to the AND function implemented by the logic circuitry.

The control device further comprises a main controller circuitry connected to the logic circuitry. The main controller circuitry may receive and process user inputs in the active state, which may include *inter alia* processing of a mute command received via a remote control.

In active state, the standby controller circuitry, the sound controller circuitry, the logic circuitry, and the main controller circuitry are powered by the power source of the electronic apparatus. However, in standby state, the standby controller circuitry is powered by the power source whereas the sound controller circuitry, and the main controller circuitry are not powered by the power source. As noted, the logic circuitry may be powered in active state only.

According to an example embodiment of the invention, the active state of the electronic apparatus may comprise a boot-up phase in which the main controller circuitry is unresponsive to user inputs. This boot-up phase is followed by an operation phase in which the main controller circuitry is responsive to user inputs. According to individual and separate second aspect of this invention (which may or may not be combined with the other aspects discussed herein), during operation phase, controlling operation of the electronic apparatus, such as adjusting channel settings, screen settings, and/or audio settings (e.g. sound volume), may (essentially) exclusively be performed by the main controller circuitry. In standby state and/or in the boot-up phase of the active mode, the standby controller circuitry receives and processes (essentially) the user inputs. The functionality of the electronic apparatus that may be controlled in standby state may be limited to a "basic" set of control functionality, such as for example, powering the electronic apparatus and muting its sound output.

In an example embodiment of the invention, initially the main controller circuitry is in the boot-up phase when entering into active state. This means that, when entering into active state, the main controller circuitry is unresponsive to user inputs for some time. After this time period of being unresponsive to user inputs (boot-up phase), the main controller circuitry switches into operation phase. The boot-up phase time period may for example be in the range of a few seconds, e.g. approximately 10 seconds, 5 seconds, 3 seconds, or 2 seconds.

According to another example embodiment of the first or second aspect of the invention, the standby controller circuitry may receive a mute signal in boot-up phase of the active state and, responsive to the mute signal, assert a muting control signal to the logic circuitry in the manner described above. This is advantageous, because if the user realizes after turning on the electronic apparatus that the sound of the electronic apparatus is too high/loud, the user may still cause the sound controller to be disabled so as to switch off the sound output of the electronic apparatus and does not have to wait until boot-up phase of the main controller circuitry is terminated.

The standby controller circuitry may therefore be responsive to user inputs during boot-up phase of the main controller circuitry (in addition to the standby phase where the electronic apparatus is in standby state).

In an example embodiment of the invention, the standby controller circuitry may maintain the asserted muting control signal when entering into operation phase. This means that, after the main controller circuitry terminates its boot-up phase and enters into operation phase, the standby controller circuitry may maintain the muting control signal also in operation phase.

According to an example embodiment of the invention, the main controller circuitry may comprise a memory to store an audio output signal volume of the sound controller and optionally further settings and configuration data, such as channel settings, screen settings, network access information, etc., when switching from active state to standby state. The main controller circuitry may also restore the audio output signal level of the sound controller and the further settings and configuration data, if any, when switching from standby state to active state. If the user does not activate a mute mode during standby state of the electronic apparatus, the electronic apparatus restarts according to the settings of the electronic apparatus during a previous operation before switching from active state to standby state (i.e. before turning off the electronic apparatus). This allows a user to, before turning off the electronic apparatus, define operation settings of the electronic apparatus during active state for a subsequent turning on of the electronic apparatus. The preset settings and configuration data by the user may be stored in a non-volatile or volatile memory that may be provided in the main controller circuitry and may be restored by the main controller circuitry when the electronic device is turned on and the main controller circuitry enters boot-up phase respectively operation phase.

In an example embodiment of the invention, the standby controller circuitry may comprise a standby controller implemented by means of an integrated circuit (IC). The standby controller may also be implemented by a microcontroller.

In an example embodiment of the invention, the sound controller may be implemented by means of an integrated circuit (IC). The sound controller may also be implemented by a microcontroller.

In an example embodiment of the invention, the main controller circuitry may comprise a main controller which may be implemented by means of an integrated circuit (IC). The main controller may also be implemented by a microcontroller.

In an example embodiment of the invention, the AND function is arranged upstream the sound controller circuitry. Upstream is to be understood in that an output of the AND function, for example the AND gate, is connected to a control input of the sound controller circuitry to facilitate "muting" the sound controller.

According to a further example embodiment of the invention, the logic circuitry providing the AND function is (i) provided between the standby controller circuitry and the sound controller circuitry and (ii) between the main controller circuitry and the sound controller circuitry. If an AND gate is provided, the AND gate receives a first input signal from the standby controller circuitry and a second input signal from the main controller circuitry when the AND gate is powered (e.g. in active state). If a series connection of two transistors implements the AND function, a first of two transistors may receive a first input signal from the standby controller circuitry and a second of two transistors receives a second input signal from the main controller circuitry. If a NAND gate combined with an inverter is used to implement an AND function, the NAND gate receives a first input signal from the standby controller circuitry and a second input signal from the main controller circuitry. In every case, an output of the logic function is connected to an input of the sound controller circuitry.

In another embodiment of the invention, the electronic apparatus may further comprise a display for displaying an audio output level and/or a channel information stored on the main controller circuitry and corresponding to the audio output level respectively channel information when switching from active state to standby state. This allows a user to see the last operation settings of the electronic apparatus, namely the operation settings during a previous operation phase.

In an example embodiment of the invention, a remote control may be provided for operating the electronic apparatus. The standby controller circuitry may receive signals from the remote control while the electronic device is in standby state and/or while the main controller circuitry is in boot-up phase of the active state. Such signals may essentially be a mute signal or a power on signal. During operation phase of the main controller circuitry, the main controller circuitry may receive signals from the remote control relating to operation settings of the electronic apparatus, respectively a change in operation settings of the electronic apparatus.

In another embodiment of the invention, the standby controller circuitry may provide signals received from a remote control to the main controller circuitry during operation phase of the active state. Further, the main controller circuitry may process the signals received from the remote control in order to control operation settings of the electronic apparatus.

According to an example embodiment of the invention, in active state, the main controller circuitry may request an output signal of the standby controller circuitry. In response to the standby controller circuitry output signal, the main controller circuitry may instruct the electronic apparatus to output video information on its display panel (screen) if the standby controller circuitry output signal is a disable signal. This means that the electronic apparatus indicates on its display panel that the electronic apparatus is operated in mute mode. Usual visual signs or visual information may be chosen. For example, the word "mute", "volume 0", or a schematic picture of a scratched speaker is shown. However, even no disable signal is asserted by the logic circuitry to the sound controller circuitry, the display panel of the electronic apparatus may display the current output volume of the speakers, for example by "volume 10".

In another example embodiment of the invention, the audio signal output by the electronic apparatus speakers corresponds to a stored audio signal output corresponding to the audio signal output when switching from active state to standby state.

It is noted that a method according to the invention can be defined such that it realizes the control device according to the described aspects of the invention.

### BRIEF DESCRIPTION OF THE DRAWINGS

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- **Fig. 1**: shows a schematic drawing of an electronic apparatus comprising a control device according to an exemplary embodiment of the invention;
- **Fig. 2**: shows an exemplary control device including a sound controller circuitry connected to logic circuitry according to an exemplary embodiment of the invention;
- **Fig. 3**: shows another exemplary control device including a sound controller circuitry connected to logic circuitry according to another exemplary embodiment of the invention;
- **Fig. 4**: shows another exemplary control device including sound controller circuitry connected to logic circuitry according to a further exemplary embodiment of the invention;
- **Fig. 5**: shows an exemplary display of an audio output level and channel information in standby mode on a display panel of an electronic apparatus according to an exemplary embodiment of the invention; and
- **Fig. 6**: shows an exemplary display of an audio output level and channel information in standby mode on a display panel of an electronic apparatus according to another exemplary embodiment of the invention.

### DETAILED DESCRIPTION

In the following detailed description of preferred embodiments of the present invention a control device is generally indicated with the reference numeral 1. The control device 1 may be used in an electronic apparatus. In the examples below, the electronic apparatus is a television set (TV set), but the invention may also be used in other devices that can be operated in stand-by mode and which are capable of providing audio output (e.g. computer displays, all-in-one computers, tablet computers, etc.).

One aspect of the invention is the idea of saving energy in standby state of an electronic apparatus by powering as few components thereof as possible. An electronic apparatus commonly comprises different interconnected control circuits which need to be powered to be operational. These control circuits commonly comprise one or more circuits that control the output (and sound volume) of audio/sound. The sound volume is sometimes also referred to as sound intensity, loudness or sound level herein. A main controller circuitry may be provided which may perform operation of the electronic apparatus in an active state of the electronic apparatus. The main controller circuitry may for example process inputs from a remote control and adjust a sound output, respectively a sound level or volume, in cooperation with a sound controller being part of a sound controller circuitry.

Generally, the user inputs processed by the main controller circuitry may include one or more of channel settings, screen settings, and/or audio settings. Furthermore, the main controller circuitry may comprise video decoding circuitry to decode TV signals (e.g. of one or more of the MPEG-2, MPEG-4, H.264, H.265, DVB, DVB2, etc. standard families) and to generate video signals (video frames) for display by the electronic apparatus (TV). The main controller circuitry or alternatively the sound controller circuitry may comprise audio decoding circuitry to decode the audio streams (e.g. according to one or more of the AC-3, AMR-WB+, MPEG-4 HIGH EFFICIENCY AAC V2, MPEG-2 AAC, etc. standard families) received at the main controller circuitry.

When the electronic apparatus is turned off, in conventional apparatus, main controller circuitry is not powered. Therefore, the main controller circuitry is not responsive to user inputs received, for example, from a remote control or other inputs of the electronic apparatus, such that the user cannot adjust or set the sound output or mute the electronic apparatus for the next boot up. This means that, in order to provide such a mute-in-standby function, the main controller circuitry would need to be powered also in standby state of the electronic apparatus. However, this leads to increased power consumption and costs.

According to the present invention, a standby controller circuitry, which is already powered in order to receive the boot up or turn on control signal of the user, may output a logic "low"/0 signal in response to a muting control signal of the user in standby state of the electronic apparatus. Otherwise, if there is no muting control signal received by the standby controller circuitry, the standby controller circuitry may output a logic "high"/1 control signal to the logic circuitry, i.e. the reception of the muting control signal may toggle the control signal provided from the standby controller circuitry to the logic circuitry from logic "high"/1 state to a logic "low"/0 state. When switching from stand-by state to the active state, the logic "low"/0 signal is asserted to a logic circuitry arranged between the standby controller circuitry and the sound controller circuitry to cause the logic circuitry to output a disable signal or logic "low"/0 signal which causes the sound controller to mute the output. This may be achieved for example by the sound controller setting the sound volume to zero (0dB) or by otherwise preventing the output of a sound signal. In this case, the main controller circuitry does not have to be powered during standby state. Energy consumption can therefore be significantly lowered, as the stand-by controller circuitiy's power consumption may be (significantly) lower than that of the main controller circuitry, e.g. due to its significantly lower complexity and limited functionality.

According to an aspect of the invention, only a standby controller circuitry 3 is powered in a standby state of the electronic apparatus to implement a mute-in-standby function (i.e. other control circuitry conventionally required to process user input and/or control sound output (and muting) do not need to be powered in standby state so as to save power), so as to allow muting the apparatus in standby state. Accordingly, the apparatus can be muted (e.g. does not output any sound signal) when being turned on, i.e. the apparatus is switched from standby state to an active state.

For example, in standby mode, the standby controller circuitry 3 may assert, in response to a mute command, a control signal to the logic circuitry 9 that causes the logic circuitry 9 to output a "disable signal" (e.g. a logic "low"/0 signal) to a sound controller circuitry 5 when the electronic apparatus enters from standby state to active state so as to prevent sound/audio output from the sound controller 7. The mute command may be received from some remote control of the electronic apparatus. The standby controller circuitry 3 may - in standby state - assert a logic "low"/0 signal to an input of the logic circuitry 9 so that the logic circuitry 9 - when powered - outputs a logic "low"/0 according to the AND function, irrespective of any other input signal provided to the logic circuitry 9 from other control circuitry, e.g. from a main controller 17 or the like. This logic "low"/0 signal output from the logic circuitry 9 may for example disconnect the sound controller 7 from a power supply, may disable the sound controller 7 (e.g. setting its ENABLE input to logic "low"/0) or may cause the sound controller 7 to mute by setting the sound volume to zero (0 dB) or not outputting a sound signal.

In an embodiment of the invention, a control device 1 for use in an electronic apparatus is provided. The control device 1 comprises standby controller circuitry 3 and sound controller circuitry 5 comprising a sound controller 7. The control device 1 may optionally comprise a separate power supply, e.g. a rechargeable battery. The electronic apparatus may also have or may be connected to an external power supply that charges the battery of the control device 1 which in active state and/or in standby state. The sound controller 7 may denote one or more components/circuits that control and/or cause the generation and output of a sound/audio signal, in particular, that control the sound volume. Optionally, the electronic apparatus may also comprise a speaker 23. The speaker 23 is connected to the sound controller 7 to output sound/audio based on the sound/audio output of the sound controller 7.

Further, logic circuitry 9 is connected to the standby controller circuitry 3 and the sound controller circuitry 5. The logic circuitry 9 may provide an AND function. An AND function may for example be realized by a logic AND gate or a combination of at least two logic gates. The logic circuitry 9 has inputs and performs a Boolean AND function these inputs. In one embodiment, the logic circuitry 9 is an AND gate. The output of the logic circuitry 9 is thus at a logic "high"/1 level, if all its inputs receive signals at logic "high"/1 level. Logic gates may be for example implemented using diodes or transistors acting as electronic switches.

The control device 1 is operable in an active state in which the standby controller circuitry 3, the sound controller circuitry 5, and the logic circuitry 9 (and also potential further circuitry of the control device 1) are powered by a power source 11. The power source 11 may be included in the electronic apparatus or may be external thereto. The control device 1 is further operable in a standby state in which the standby controller circuitry 3 is powered by the power source 11, whereas the sound controller circuitry 5 and optionally also the logic circuitry 9 are not powered by the power source 11. Optionally, the logic circuitry 9 may also be powered in standby state and active state. Hence, in standby state, the sound controller circuitry 5 which would conventionally control the sound intensity and output does not need to be powered, as the mute command is processed by the standby controller 15.

In standby state, the standby controller circuitry 3 may receive a mute command (e.g. a mute signal). Responsive to the mute command, the standby controller circuitry 3 asserts a muting control signal to the logic circuitry 9. The mute signal may for example be triggered via a remote control 21 or via an input, e.g. a mute switch, arranged at the electronic device. Note that a remote control 21 may be a "conventional" remote control operating by means of infrared or ultrasonic radiation, the remote control 21 could also be a mobile phone (e.g. smartphone), tablet computer, etc. that has some control function (e.g. an remote control application) for controlling the electronic apparatus).

The logic circuitry 9 may, if the muting control signal is asserted by the standby controller circuitry 3, output a disable signal to the sound controller circuitry 5 to prevent the sound controller 7 from outputting a sound signal when entering into active state. The logic circuitry 9 performs an AND function taking the muting control signal as one of the inputs to the AND function in order to cause the sound controller circuitry 5 to output a disable signal irrespective of preset audio settings (or volume) or further input signals to the AND function provide by other control circuitry. In an example embodiment of the invention, when the sound controller circuitry 5 receives a disable signal, a speaker 23 of the electronic apparatus is not actuated by the sound controller 7 when switching from the standby state to the active state, which means that no audio or sound output by the electronic apparatus occurs.

In an example embodiment of the invention, the standby controller circuitry 3 maintains the asserted muting control signal in active state. When switching from standby state to active state, the standby controller circuitry 3 maintains the muting control signal also in active state, so that when the logic circuitry 9 is powered, the muting control signal is provided as an input to the AND function implemented by the logic circuitry 9.

In another example embodiment of the invention, the control device 1 further comprises a main controller circuitry 13 connected to the logic circuitry 9. The main controller circuitry 13 may receive and process user inputs in the active state. This includes processing of a mute command received via a remote control 21 or another input. In active state, the standby controller circuitry 3, the sound controller circuitry 5, the logic circuitry 9, and the main controller circuitry 13 are powered by a power source 11 of the electronic apparatus. However, in standby state, the standby controller circuitry 3 is powered by the power source 11 whereas the sound controller circuitry 5, and the main controller circuitry 13 are not powered by the power source 11.

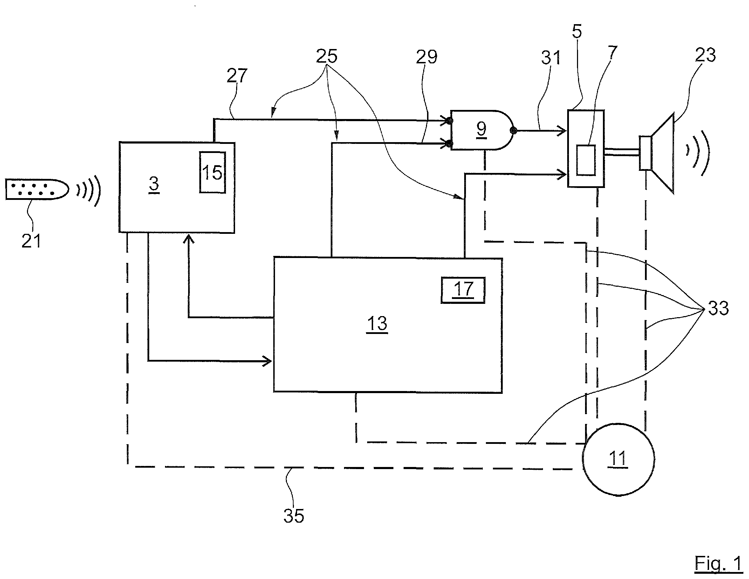

Figs. 1 to 4 are used to explain the functioning of the control device 1 according to different exemplary embodiments of the invention. Fig. 1 shows a schematic drawing of an electronic apparatus comprising a control device according to an exemplary embodiment of the invention. The electronic apparatus 1 comprises standby controller circuitry 3, logic circuitry 9, sound controller circuitry 5, and main controller circuitry 13. As noted above, controller circuitry 3, logic circuitry 9 and sound controller circuitry 5 may form a control device.

Lines 25 indicates a signal path of a corresponding electronic signal. For example regarding the logic circuitry 9, a line 27 connects an output of the standby controller circuitry 3 to an input of the logic circuitry 9 so as to allow the standby controller circuitry 3 asserting the muting control signal. A second line 29 connects the main controller circuitry 13 and another input of the logic circuitry 9. When switching to active state, the main controller circuitry 13 may output a logic "high"/1 signal on line 29. Accordingly, if there was no mute command received in standby state, the standby controller circuitry 3 will keep a logic "high"/1 signal asserted on line 27, so that the logic circuitry 9 outputs an enable signal to the sound controller circuitry 5. A third line 31 connects an output of the logic circuitry 9 and an input of the sound controller circuitry 5 so as to provide a disable/enable signal to the sound controller circuitry 5.

Still referring to Fig. 1 to 4, the dashed lines 33 indicate power supply lines connecting a respective circuitry/controller with the power source 11. Each of the power supply lines 33 may be activated and/or deactivated depending on the current state of the electronic apparatus, as explained above. For example, in standby state of the electronic apparatus, only the power supply line 35 may provide power to the standby controller circuitry 3, whereas the other power supply lines 33 are deactivated. It is also possible that, in standby state, the power supply line connected to the logic circuitry 9 is also activated.

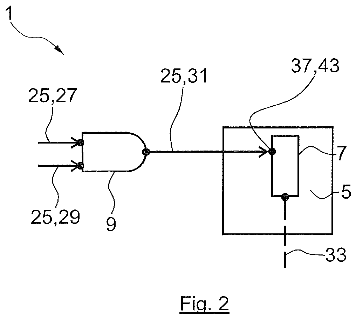

Figs. 2, 3, and 4 show alternative implementations of the control device 1. All implementations shown in Figs. 2, 3 and 4 allow a user to configure the electronic device in standby state to restart in mute mode (mute in standby function).

In particular, alternative embodiments of a switch 37, 39 for realizing a deactivation and/or activation of the power supply of the output of the sound controller 7 are shown. In the following, for reasons of simplicity, the functioning of alternative embodiments of the control device 1 of realizing a deactivation and/or activation of the power supply of the sound controller 7, respectively of an output 41 of the sound controller 7, are described by means of a switch. Such a switch, for example, may comprise an input and an output wherein in order to open and/or close the switch, a disable respectively enable signal may be asserted to the switch. The switch according to Fig. 2 can be referenced to as an internal switch 37. This means that the internal switch 37 is provided within the sound controller 7. The sound controller 7 receives two input signals, one input signal being the output signal of the logic circuitry 9, and the other input signal being a power supply line 33. The sound controller 7 only outputs an enable or logic "high"/1 signal if the input from the logic circuitry 9 at the sound controller enable input 43 is an enable or logic "high"/1 signal, such that the internal switch 37 is closed, irrespective of the signal asserted by the power supply line 33. Otherwise, the internal switch 37 is open disabling an output of the sound controller 7.

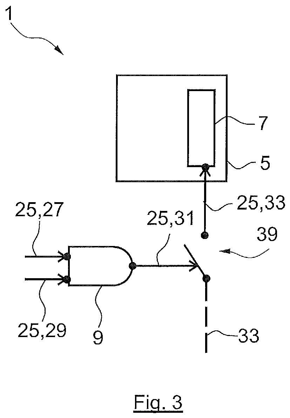

The switch according to Fig. 3 can be referenced to as an external switch 39. The functioning of the external switch 39 is similar to the functioning of the internal switch 37. However, as can be seen in Fig. 3, the external switch 39 is arranged outside the sound controller 7. The external switch 39 is only closed if the output of the logic circuitry 9 is an enable or logic "high"/1 signal. Then, the sound controller 7 is connected to the power source 11 via the power supply line 33, so as to cause an audio output.

It is clear that in both example embodiments of the switch 37, 39, the sound controller 7 only receives an enable signal, so as to cause an audio output, if the switch 37, 39 is closed, namely if the logic circuitry 9 asserts an enable signal to the sound controller 7.

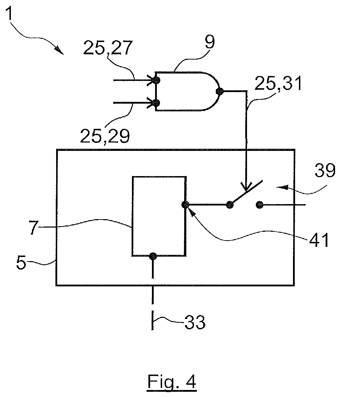

In Fig. 4, an alternative embodiment of an external switch 39 is shown, wherein the main difference in comparison to the embodiment of Fig. 3 is that the output of the logic circuitry 9 is connected to the output 41 of the sound controller 7, instead of being connected to an input of the sound controller 7. The sound controller 7 may be powered by the power supply line 33 which may in general cause an audio output. The switch 39 may be designed such that it is only closed and therefore outputs an enable signal if the asserted input signal by the logic circuitry 9 is an enable signal. Otherwise, the switch 39 remains open and the electronic apparatus is muted. In each of the embodiments according to Fig. 2, 3, and 4, if a disable signal is asserted by the logic circuitry 9 to the switch 37, 39, the sound controller 7 receives a disable signal irrespective of further input signals for example from the main controller circuitry 13. This inventive principle is further described herein below.

Table 1 shown herein below indicates the principle of the AND function according to the invention.

**Table 1**

| **Main controller circuitry 13** | **Standby controller circuitry 3** | **Logic Circuitry 9** |
|---|---|---|
| Signal / Logic Output 29 | Signal / Logic Output 27 | Signal / Logic Output 31 |
| Muting signal / 0 | Muting signal / 0 | Sound Disable / 0 |
| Muting signal / 0 | Default / 1 | Sound Disable / 0 |
| Volume enable signal / 1 | Muting signal / 0 | Sound Disable / 0 |
| Volume enable signal / 1 | Default / 1 | Sound Enable / 1 |

The first column on the left indicates output signals of the main controller circuitry 13, the second column in the middle indicates output signals of the standby controller circuitry 3, and the third column on the right indicates an output of the AND function. It can be seen, that the standby controller circuitry 3 has a default value of 1, which means that the standby controller circuitry 3 outputs an enable signal (e.g. logic "high" or logic "1") if no mute signal was received by the standby controller circuitry 3. Conclusively, when a user presses a mute button on a remote control 21 or on a mute button arranged at the electronic apparatus in standby mode, the standby controller circuitry 3 causes the sound controller circuitry 5 to output a disable signal (e.g. logic "low" or logic "0") by means of the AND function in order to disable an electronic apparatus speaker 23, regardless of the main controller circuitry 13 output asserted to the logic circuitry 9. This means that the sound controller circuitry 5 output is a disable signal even if the main controller circuitry 13 output is an enable signal. Further, when the electronic apparatus is powered on, so as to switch from standby state to active state, the electronic apparatus is started in mute mode if the standby controller 15 output is a disable signal. Then, if the user wishes to unmute the electronic device, he may again press the mute button, or "volume +" or "volume -" button, on the remote control 21 or at the electronic apparatus so that the main controller circuitry 13 informs the standby controller circuitry 3 of the corresponding user command and causes the standby controller circuitry 3 to set its output value to an enable signal. Thus, the AND function receives an enable signal from the standby controller circuitry 3 and from the main controller circuitry 13 and therefore outputs an enable signal to power on the sound controller circuitry 5. As a result, the electronic apparatus outputs audio or sound via its speakers 23. After this step, control on the sound controller circuitry 5 is exclusively driven by the main controller circuitry 13 during operation phase of the electronic apparatus. It is a further advantage of the present invention that the user does not need to check a stored volume setting of the electronic apparatus during standby state, as every input mute signal by the user during standby state causes the standby controller circuitry 3 and conclusively the AND function to output a disable signal and assert this disable signal to the sound controller circuitry 5, thereby disabling audio output of the electronic apparatus.

**Table 2**

| **Main controller circuitry 13** | **Standby controller circuitry 3** | **Logic Circuitry 9** |
|---|---|---|
| Signal / Logic Output 29 | Signal / Logic Output 27 | Signal / Logic Output 31 |
| Muting signal / 0 | Muting signal / 0 | Sound Disable / 0 |
| Muting signal / 0 | Default / 1 | Sound Disable / 0 |
| Volume enable signal / 1 | Muting signal / 0 | Sound Disable / 0 |
| Volume enable signal / 1 | Default / 1 | Sound Enable / 1 |

A general advantage of the invention is that an easy and reliable mute-in-standby function for an electronic apparatus is provided which allows powering as few components as possible. The control device 1 according to the invention assures that the electronic apparatus turns on in mute mode irrespective of preset volume settings stored on the main controller circuitry 13 and irrespective of how often a user has pressed the mute button during standby state. This means that, if the mute button is pressed once during standby state of the electronic apparatus, further pressing of the mute button for example on the remote control 21 during standby state does not change the output of the standby controller circuitry 3. Conclusively, the standby controller circuitry 3 maintains the asserted disable signal. A visual and/or audio feedback may be provided on the remote control 21 to indicate that mute mode is selected. Alternatively and/or additionally, a visual and/or audio feedback may be indicated by the electronic apparatus itself. For example, an LED may be integrated into the remote control 21 and/or into the electronic apparatus which is illuminated if mute mode is selected. Further, in order to output the audio feedback signal, an audio feedback control signal may be directly asserted by the standby controller circuitry 3 to the sound controller 7 so as to cause an audio tone. However, if the electronic apparatus is turned on in mute mode and the user wishes to activate audio output of the electronic apparatus, it is further advantageous when the electronic apparatus does not immediately output the audio output level stored on the main controller circuitry 13, which may be very high/loud. Rather, the present invention provides the possibility for the user to activate audio output of the electronic apparatus while allowing the user to continuously increase the audio output level from mute level, respectively "volume 0". Therefore, in an example embodiment, the main controller circuitry 13 may, when the electronic apparatus turns on in mute mode and the user again presses to mute button during boot-up phase or operation phase of the main controller circuitry 13, instruct the sound controller circuitry 5 to output a sound signal relating to a lowest audio output level, for example "volume 1". Only, if the user subsequently presses the "volume +" button for example on the remote control 21, the audio output level is continuously increased according to the user input. Therefore, it is assured that the audio output level may be kept low even if the audio output information stored on the main controller circuitry 13 was previously higher. The present invention is not limited to above described embodiment. For example, the control device 1 may also be configured such that when the user presses "volume +" or "volume -", on the remote control 21 or on the electronic apparatus, after the electronic apparatus is turned on in mute mode, the sound controller circuitry 5 may output a sound signal relating to a lowest audio output level, for example "volume 1". In this case, the sound controller circuitry may output an audio output level relating to a stored audio output level on the main controller circuitry 13 if the user presses the mute button for example on a remote control 21 to unmute the electronic apparatus.

In another example embodiment of the invention, it is also possible that, if the user has selected mute mode in standby state of the electronic apparatus, the user may disable or deactivate mute mode by pressing the mute button again. A further audio and/or visual feedback may be provided by the remote control 21 and/or the electronic apparatus itself. Again, an audio feedback control signal may be directly asserted by the standby controller circuitry 3 to the sound controller 7 so as to cause an audio tone. It is clear that the user may afterwards again choose mute mode.

According to an example embodiment of the invention, the active state of the electronic apparatus may comprise a boot-up phase in which the main controller circuitry 13 is unresponsive to user inputs. This boot-up phase is followed by an operation phase in which the main controller circuitry 13 is responsive to user inputs. According to individual and separate second aspect of this invention (which may or may not be combined with the other aspects discussed herein), during operation phase, controlling operation of the electronic apparatus, such as adjusting channel settings, screen settings, and/or audio settings (e.g. sound volume), may (essentially) exclusively be performed by the main controller circuitry 13. In standby state and/or in the boot-up phase of the active mode, the standby controller circuitry 3 receives and processes (essentially) the user inputs. The functionality of the electronic apparatus that may be controlled in standby state may be limited to a "basic" set of control functionality, such as for example powering the electronic apparatus and muting.

In an example embodiment of the invention, initially the main controller circuitry 13 is in the boot-up phase when entering into active state. This means that, when entering into active state, the main controller circuitry 13 is unresponsive to user inputs for some time. After this time period of being unresponsive to user inputs (boot-up phase), the main controller circuitry 13 switches into operation phase. The boot-up phase time period may for example be in the range of a few seconds, e.g. 10 seconds, 5 seconds, 3 seconds, or 2 seconds.

According to another example embodiment of the first or second aspect of the invention, the standby controller circuitry 3 may receive a mute signal in boot-up phase of the active state and, responsive to the mute signal, assert a muting control signal to the logic circuitry 9 in the manner described above. This is advantageous, because if the user realizes after turning on the electronic apparatus that the sound of the electronic apparatus is too high/loud, the user may still cause the sound controller 7 to be disabled so as to switch off the sound output of the electronic apparatus and does not have to wait until boot-up phase of the main controller circuitry 13 is terminated.

The standby controller circuitry 3 may therefore be responsive to user inputs during boot-up phase of the main controller circuitry 13 (in addition to the standby phase where the electronic apparatus is in standby state).

In an example embodiment of the invention, the standby controller circuitry 3 may maintain the asserted muting control signal when entering into operation phase. This means that, after the main controller circuitry 13 terminates its boot-up phase and enters into operation phase, the standby controller circuitry 3 may maintain the muting control signal also in operation phase.

According to an example embodiment of the invention, the main controller circuitry 13 may store an audio output signal volume of the sound controller 7 and optionally further settings and configuration data, such as channel settings, screen settings, network access information, etc., when switching from active state to standby state. The main controller circuitry 13 may also restore the audio output signal level of the sound controller 7 and the further settings and configuration data, if any, when switching from standby state to active state. If the user does not activate a mute mode during standby state of the electronic apparatus, the electronic apparatus restarts according to the settings of the electronic apparatus during a previous operation before switching from active state to standby state (i.e. before turning off the electronic apparatus). This allows a user to, before turning off the electronic apparatus, define operation settings of the electronic apparatus during active state for a subsequent turning on of the electronic apparatus. The preset settings and configuration data by the user may be stored in a non-volatile or volatile memory that may be provided in the main controller circuitry 13 and may be restored by the main controller circuitry 13 when the electronic device is turned on and the main controller circuitry 13 enters boot-up phase respectively operation phase.

In an example embodiment of the invention, the standby controller circuitry 3 may comprise a standby controller 15 implemented by means of an integrated circuit (IC). The standby controller 15 may also be implemented by a microcontroller.

In an example embodiment of the invention, the sound controller 7 may be implemented by means of an integrated circuit (IC). The sound controller 7 may also be implemented by a microcontroller.

In an example embodiment of the invention, the main controller circuitry 13 may comprise a main controller 17 which may be implemented by means of an integrated circuit (IC). The main controller 17 may also be implemented by a microcontroller.

In an example embodiment of the invention, the AND function is arranged upstream the sound controller circuitry 5. Upstream is to be understood in that an output of the AND function, for example the AND gate, is connected to a control input of the sound controller circuitry 5 to facilitate "muting" the sound controller 7.

According to a further example embodiment of the invention, the logic circuitry 9 providing the AND function is (i) provided between the standby controller circuitry 3 and the sound controller circuitry 5 and (ii) between the main controller circuitry 13 and the sound controller circuitry 5. If an AND gate is provided, the AND gate receives a first input signal from the standby controller circuitry 3 and a second input signal from the main controller circuitry 13 when the AND gate is powered (e.g. in active state). If a series connection of two transistors implements the AND function, a first of two transistors may receive a first input signal from the standby controller circuitry 3 and a second of two transistors receives a second input signal from the main controller circuitry 13. If a NAND gate combined with an inverter is used to implement an AND function, the NAND gate receives a first input signal from the standby controller circuitry 3 and a second input signal from the main controller circuitry 13. In every case, an output of the logic function is connected to an input of the sound controller circuitry 5.

In another embodiment of the invention, the electronic apparatus may further comprise a display 19 for displaying an audio output level and optionally channel information stored on the main controller circuitry 13 and corresponding to the audio output level respectively channel information when switching from active state to standby state. This allows a user to see the last operation settings of the electronic apparatus, namely the operation settings during a previous operation phase.

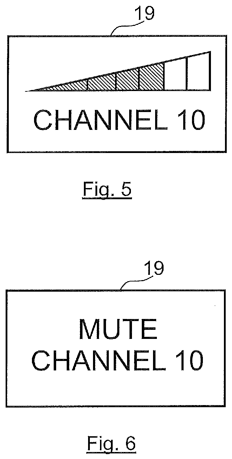

Figs. 5 and 6 show the display 19 with exemplary display information regarding a volume setting and a channel setting. Such a display 19 may indicate the respective information during standby state of the electronic apparatus.

In an example embodiment of the invention, a remote control 21 may be provided for operating the electronic apparatus. The standby controller circuitry 3 may receive signals from the remote control 21 while the electronic device is in standby state and/or while the main controller circuitry 13 is in boot-up phase of the active state. Such signals may essentially be a mute signal or a power on signal. During operation phase of the main controller circuitry 13, the main controller circuitry 13 may receive signals from the remote control 21 relating to operation settings of the electronic apparatus, respectively a change in operation settings of the electronic apparatus.

In another embodiment of the invention, the standby controller circuitry 3 may provide signals received from a remote control 21 to the main controller circuitry 13 during operation phase of the active state. Further, the main controller circuitry 13 may process the signals received from the remote control 21 in order to control operation settings of the electronic apparatus. The communication between the remote control 21 and the electronic apparatus, respectively the standby controller circuitry 3 and/or the main controller circuitry 13, may be realized by wireless technology, for example using infrared light, Bluetooth, or WLAN (WiFi). Also, general mobile devices, such as mobile phones (or smartphones), may be used in order to control operation of the electronic apparatus via applications running on the mobile phone.

According to an example embodiment of the invention, in active state, the main controller circuitry 13 may request an output signal of the standby controller circuitry 3. In response to the standby controller circuitry 3 output signal, the main controller circuitry 13 may instruct the electronic apparatus to output video information on its screen if the standby controller circuitry 3 output signal is a disable signal. This means that the electronic apparatus indicates on its screen that the electronic apparatus is operated in mute mode. Usual visual signs or visual information may be chosen. For example, the word "mute", "volume 0", or a schematic picture of a scratched speaker 23 is shown. However, even no disable signal is asserted by the logic circuitry 9 to the sound controller circuitry 5, the display panel of the electronic apparatus may display 19 the current output volume of the speakers 23, for example by "volume 10".

In another example embodiment of the invention, the audio signal output by the electronic apparatus speakers 23 corresponds to a stored audio signal output corresponding to the audio signal output when switching from active state to standby state.

The features disclosed in the above description, the figures and the claims may be significant for the realization of the invention in its different embodiments individually as in any combination. The scope of the present invention is however defined by the claims.

### REFERENCE SIGN LIST

- 1: control device
- 3: standby controller circuitry
- 5: sound controller circuitry
- 7: sound controller
- 9: logic circuitry
- 11: power source
- 13: main controller circuitry
- 15: standby controller
- 17: main controller
- 19: display
- 21: remote control
- 23: speaker
- 25, 27, 29, 31: signal line
- 33, 35: power supply line
- 37,39: switch
- 41: sound controller output
- 43: sound controller enable input

## Claims

1. A control device (1) for use in an electronic apparatus, such as a television, the control device (1) comprising:
standby controller circuitry (3) configured to receive a mute signal in a standby state;
sound controller circuitry (5) comprising a sound controller (7), wherein the sound controller (7) is configured to control output of a sound signal at a given sound volume; and
a main controller circuitry (13) configured to receive and process user inputs in the active state;
wherein the control device (1) is operable in an active state in which the standby controller circuitry (3), the sound controller circuitry (5), and the main controller circuitry (13)are powered by a power source (11) of the electronic apparatus, and said standby state in which the standby controller circuitry (3) is powered by the power source (11);
**characterized in that** control device (1) further comprises:
logic circuitry (9) configured to provide an AND function, the logic circuitry (9) having a first input configured to receive a muting control signal from the standby controller circuitry (3) and a second input receiving a signal from the main controller circuitry (13), wherein the logic circuitry (9) has an output connected via a line (31) to the sound controller circuitry (5) to provide an enable or disable signal to the sound controller circuitry (5), and wherein the logic circuitry (9) is powered by the power source (11) in the active state;
wherein in the standby state the main controller circuitry (13), the sound controller circuitry (5) and optionally also the logic circuitry (9) are not powered by the power source (11);
wherein the standby controller circuitry (3) is connected via a line (25) to the first input of the logic circuitry (9) and is configured to assert, responsive to the mute signal, the muting control signal to the logic circuitry (9); and
wherein the logic circuitry (9) is configured to, if the muting control signal is asserted by the standby controller circuitry (3), output the disable signal to the sound controller circuitry (5) to prevent the sound controller (7) from outputting a sound signal when entering into active state,
wherein the logic circuitry (9) is an AND gate, or a NAND gate combined with an inverter.

2. The control device (1) according to claim 1, wherein the standby controller circuitry (3) is configured to maintain the asserted muting control signal in active state.

3. The control device (1) according to claim 1 or 2, wherein the active state of the electronic apparatus comprises a boot-up phase in which the main controller circuitry (13) is unresponsive to user inputs followed by an operation phase in which the main controller circuitry (13) is responsive to user inputs.

4. The control device (1) according to claim 3, wherein the main controller circuitry (13) is initially in the boot-up phase when entering into active state.

5. The control device (1) according to claim 3 or 4, wherein the standby controller circuitry (3) is further configured to receive, in boot-up phase of the active state, a mute signal and, responsive to the mute signal, assert a muting control signal to the logic circuitry (9).

6. The control device (1) according to claim 5, wherein the standby controller circuitry (3) is configured to maintain the asserted muting control signal when entering into operation phase.

7. The control device (1) according to any of claims 2 to 6, wherein the main controller circuitry (13) is configured to store an audio output signal level of the sound controller (7) and optionally further operation phase information, when switching from active state to standby state; and
wherein the main controller circuitry (13) is further configured to restore the audio output signal level of the sound controller (7) and the further operation phase information, if any, when switching from standby state to active state.

8. The control device (1) according to any of the preceding claims, wherein the standby controller circuitry (3) comprises a standby controller (15) implemented by means of an integrated circuit, IC, in particular a microcontroller.

9. The control device (1) according to any of the preceding claims, wherein the sound controller (7) is implemented by means of an integrated circuit, IC, in particular a microcontroller.

10. The control device (1) according to any of claims 2 to 9, wherein the main controller circuitry (13) comprises a main controller which is implemented by means of an integrated circuit, IC, in particular a microcontroller.

11. The control device (1) according to any of the preceding claims, wherein the electronic apparatus comprises a display (19) for displaying an audio output level and/or a channel information stored on the main controller circuitry (13) and corresponding to the audio output level respectively channel information when switching from active state to standby state.

12. The control device (1) according to any of claims 3 to 11, wherein the standby controller circuitry (3) is configured to receive signals from a remote control (21) while the electronic device is in standby state and/or while the main controller circuitry (13) is in the boot-up phase of the active state.

13. The control device (1) according to any of claims 3 to 12, wherein the standby controller circuitry (3) is configured to provide the signals received from a remote control (21) to the main controller circuitry (13) during operation phase of the active state; and
the main controller circuitry (13) is configured to process the signals received from the remote control (21).

14. A television apparatus comprising a control device (1) according to any of claims 1 to 13.

## Patentansprüche

1. Steuervorrichtung (1) zur Verwendung in einem elektronischen Gerät, wie beispielsweise einem Fernseher, wobei die Steuervorrichtung (1) umfasst:
eine Standby-Controllerschaltung (3), die konfiguriert ist, um ein Stummsignal in einem Standby-Zustand zu empfangen;
eine Toncontrollerschaltung (5), die einen Toncontroller (7) umfasst, wobei der Toncontroller (7) konfiguriert ist, um die Ausgabe eines Tonsignals bei einer gegebenen Tonlautstärke zu steuern; und
eine Hauptcontrollerschaltung (13), die konfiguriert ist, um Benutzereingaben im aktiven Zustand zu empfangen und zu verarbeiten;
wobei die Steuervorrichtung (1) in einem aktiven Zustand betreibbar ist, in dem die Standby-Controllerschaltung (3), die Toncontrollerschaltung (5) und die Hauptcontrollerschaltung (13) von einer Stromquelle (11) des elektronischen Geräts mit Strom versorgt werden, und dem Standby-Zustand, in dem die Standby-Controllerschaltung (3) von der Stromquelle (11) mit Strom versorgt wird;
**dadurch gekennzeichnet, dass** die Steuervorrichtung (1) ferner umfasst:
eine Logikschaltung (9), die konfiguriert ist, um eine UND-Funktion bereitzustellen, wobei die Logikschaltung (9) einen ersten Eingang, der konfiguriert ist, um ein Stummschaltsteuersignal von der Standby-Controllerschaltung (3) zu empfangen, und einen zweiten Eingang, der ein Signal von der Hauptcontrollerschaltung (13) empfängt, aufweist, wobei die Logikschaltung (9) einen Ausgang aufweist, der über eine Leitung (31) mit der Toncontrollerschaltung (5) verbunden ist, um der Toncontrollerschaltung (5) ein Aktivierungs- oder Deaktivierungssignal bereitzustellen, und wobei die Logikschaltung (9) im aktiven Zustand von der Stromquelle (11) mit Strom versorgt wird;
wobei im Standby-Zustand die Hauptcontrollerschaltung (13), die Toncontrollerschaltung (5) und optional auch die Logikschaltung (9) nicht von der Stromquelle (11) mit Strom versorgt werden;
wobei die Standby-Controllerschaltung (3) über eine Leitung (25) mit dem ersten Eingang der Logikschaltung (9) verbunden ist und konfiguriert ist, um als Reaktion auf das Stummschaltsignal das Stummschaltsteuersignal an die Logikschaltung (9) zu aktivieren; und
wobei die Logikschaltung (9) konfiguriert ist, um, wenn das Stummschaltsteuersignal von der Standby-Controllerschaltung (3) aktiviert wird, das Deaktivierungssignal an die Toncontrollerschaltung (5) auszugeben, um zu verhindern, dass der Toncontroller (7) ein Tonsignal ausgibt, wenn er in den aktiven Zustand eintritt,
wobei die Logikschaltung (9) ein UND-Gatter oder ein mit einem Inverter kombiniertes NAND-Gatter ist.

2. Steuervorrichtung (1) nach Anspruch 1, wobei die Standby-Controllerschaltung (3) konfiguriert ist, um das aktivierte Stummschaltsteuersignal im aktiven Zustand zu halten.

3. Steuervorrichtung (1) nach Anspruch 1 oder 2, wobei der aktive Zustand des elektronischen Geräts eine Hochfahrphase umfasst, in der die Hauptcontrollerschaltung (13) nicht auf Benutzereingaben reagiert, gefolgt von einer Betriebsphase, in der die Hauptcontrollerschaltung (13) auf Benutzereingaben reagiert.

4. Steuervorrichtung (1) nach Anspruch 3, wobei sich die Hauptcontrollerschaltung (13) anfänglich in der Hochfahrphase befindet, wenn sie in den aktiven Zustand eintritt.

5. Steuervorrichtung (1) nach Anspruch 3 oder 4, wobei die Standby-Controllerschaltung (3) ferner konfiguriert ist, um in der Hochfahrphase des aktiven Zustands ein Stummsignal zu empfangen und als Reaktion auf das Stummsignal ein Stummschaltsteuersignal an die Logikschaltung (9) zu aktivieren.

6. Steuervorrichtung (1) nach Anspruch 5, wobei die Standby-Controllerschaltung (3) konfiguriert ist, um das aktivierte Stummschaltsteuersignal aufrechtzuerhalten, wenn sie in die Betriebsphase eintritt.

7. Steuervorrichtung (1) nach einem der Ansprüche 2 bis 6, wobei die Hauptcontrollerschaltung (13) konfiguriert ist, um einen Audioausgabesignalpegel des Toncontrollers (7) und optional weitere Betriebsphaseninformationen zu speichern, wenn sie vom aktiven Zustand in den Standby-Zustand umschaltet; und
wobei die Hauptcontrollerschaltung (13) ferner konfiguriert ist, um den Audioausgabesignalpegel des Toncontrollers (7) und die weiteren Betriebsphaseninformationen, falls vorhanden, wiederherzustellen, wenn sie vom Standby-Zustand in den aktiven Zustand umschaltet.

8. Steuervorrichtung (1) nach einem der vorhergehenden Patentansprüche, wobei die Standby-Controllerschaltung (3) einen Standby-Controller (15) umfasst, der mittels einer integrierten Schaltung, IC, insbesondere eines Mikrocontrollers, implementiert ist.

9. Steuervorrichtung (1) nach einem der vorhergehenden Patentansprüche, wobei der Toncontroller (7) mittels einer integrierten Schaltung, IC, insbesondere eines Mikrocontrollers, implementiert ist.

10. Steuervorrichtung (1) nach einem der Patentansprüche 2 bis 9, wobei die Hauptcontrollerschaltung (13) einen Hauptcontroller umfasst, der mittels einer integrierten Schaltung, IC, insbesondere eines Mikrocontrollers, implementiert ist.

11. Steuervorrichtung (1) nach einem der vorhergehenden Patentansprüche, wobei das elektronische Gerät eine Anzeige (19) zum Anzeigen eines Audioausgabepegels und/oder einer Kanalinformation umfasst, die auf der Hauptcontrollerschaltung (13) gespeichert ist und dem Audioausgabepegel bzw. der Kanalinformation entspricht, wenn sie vom aktiven Zustand in den Standby-Zustand umschaltet.

12. Steuervorrichtung (1) nach einem der Patentansprüche 3 bis 11, wobei die Standby-Controllerschaltung (3) konfiguriert ist, um Signale von einer Fernbedienung (21) zu empfangen, während sich die elektronische Vorrichtung im Standby-Zustand befindet und/oder während sich die Hauptcontrollerschaltung (13) in der Hochfahrphase des aktiven Zustands befindet.

13. Steuervorrichtung (1) nach einem der Patentansprüche 3 bis 12, wobei die Standby-Controllerschaltung (3) konfiguriert ist, um die Signale, die von einer Fernbedienung (21) empfangen werden, der Hauptcontrollerschaltung (13) während der Betriebsphase des aktiven Zustands bereitzustellen; und
die Hauptcontrollerschaltung (13) konfiguriert ist, um die Signale, die von der Fernbedienung (21) empfangen werden, zu verarbeiten.

14. Fernsehgerät, das eine Steuervorrichtung (1) nach einem der Patentansprüche 1 bis 13 umfasst.

## Revendications

1. Dispositif de commande (1) pour utilisation dans un appareil électronique, tel qu'un téléviseur, le dispositif de commande (1) comprenant :
des circuits de contrôleur d'attente (3) configurés pour recevoir un signal muet dans un état d'attente ;
des circuits de contrôleur de son (5) comprenant un contrôleur de son (7), dans lequel le contrôleur de son (7) est configuré pour commander la sortie d'un signal sonore à un volume sonore donné ; et
des circuits de contrôleur principal (13) configurés pour recevoir et traiter des entrées d'utilisateur dans l'état actif ;
le dispositif de commande (1) étant fonctionnel dans un état actif dans lequel les circuits de contrôleur d'attente (3), les circuits de contrôleur de son (5), et les circuits de contrôleur principal (13)sont alimentés par une source d'alimentation (11) de l'appareil électronique, et ledit état d'attente dans lequel les circuits de contrôleur d'attente (3) sont alimentés par la source d'alimentation (11) ;
**caractérisé en ce que** le dispositif de commande (1) comprend en outre :
des circuits logiques (9) configurés pour fournir une fonction ET, les circuits logiques (9) ayant une première entrée configurée pour recevoir un signal de commande de blocage depuis les circuits de contrôleur d'attente (3) et une deuxième entrée recevant un signal depuis les circuits de contrôleur principal (13), dans lequel les circuits logiques (9) ont une sortie connectée par l'intermédiaire d'une ligne (31) aux circuits de contrôleur de son (5) pour fournir un signal d'activation ou de désactivation aux circuits de contrôleur de son (5), et dans lequel les circuits logiques (9) sont alimentés par la source d'alimentation (11) dans l'état actif ;
dans lequel, dans l'état d'attente les circuits de contrôleur principal (13), les circuits de contrôleur de son (5) et en outre, facultativement, les circuits logiques (9) ne sont pas alimentés par la source d'alimentation (11) ;
dans lequel les circuits de contrôleur d'attente (3) sont connectés par l'intermédiaire d'une ligne (25) à la première entrée des circuits logiques (9) et sont configurés pour appliquer, en réponse au signal muet, le signal de commande de blocage aux circuits logiques (9) ; et dans lequel les circuits logiques (9) sont configurés pour, si le signal de commande de blocage est appliqué par les circuits de contrôleur d'attente (3), délivrer en sortie le signal de désactivation aux circuits de contrôleur de son (5) pour empêcher le contrôleur de son (7) de délivrer en sortie un signal sonore lors de l'entrée dans l'état actif,
dans lequel les circuits logiques (9) sont une porte ET ou une porte NONET combinée avec un inverseur.

2. Dispositif de commande (1) selon la revendication 1, dans lequel les circuits de contrôleur d'attente (3) sont configurés pour maintenir le signal de commande de blocage appliqué dans l'état actif.

3. Dispositif de commande (1) selon la revendication 1 ou 2, dans lequel l'état actif de l'appareil électronique comprend une phase d'amorçage dans laquelle les circuits de contrôleur principal (13) sont non réactifs aux entrées d'utilisateur suivie d'une phase fonctionnelle dans laquelle les circuits de contrôleur principal (13) sont réactifs aux entrées d'utilisateur.

4. Dispositif de commande (1) selon la revendication 3, dans lequel les circuits de contrôleur principal (13) sont initialement dans la phase d'amorçage lors de l'entrée dans l'état actif.

5. Dispositif de commande (1) selon la revendication 3 ou 4, dans lequel les circuits de contrôleur d'attente (3) sont en outre configurés pour recevoir, dans la phase d'amorçage de l'état actif, un signal muet et, en réponse au signal muet, appliquer un signal de commande de blocage aux circuits logiques (9).

6. Dispositif de commande (1) selon la revendication 5, dans lequel les circuits de contrôleur d'attente (3) sont configurés pour maintenir le signal de commande de blocage appliqué lors de l'entrée en phase fonctionnelle.

7. Dispositif de commande (1) selon l'une quelconque des revendications 2 à 6, dans lequel les circuits de contrôleur principal (13) sont configurés pour stocker un niveau de signal de sortie audio du contrôleur de son (7) et en outre, facultativement, des informations de phase fonctionnelle, lors de la commutation de l'état actif à l'état d'attente ; et
dans lequel les circuits de contrôleur principal (13) sont en outre configurés pour restaurer le niveau de signal de sortie audio du contrôleur de son (7) et facultativement des informations de phase fonctionnelle supplémentaires, le cas échéant, lors de la commutation de l'état d'attente à l'état actif.

8. Dispositif de commande (1) selon l'une quelconque des revendications précédentes, dans lequel les circuits de contrôleur d'attente (3) comprennent un contrôleur d'attente (15) mis en œuvre au moyen d'un circuit intégré, IC, en particulier un microcontrôleur.

9. Dispositif de commande (1) selon l'une quelconque des revendications précédentes, dans lequel le contrôleur de son (7) est mis en œuvre au moyen d'un circuit intégré, IC, en particulier un microcontrôleur.

10. Dispositif de commande (1) selon l'une quelconque des revendications 2 à 9, dans lequel les circuits de contrôleur principal (13) comprennent un contrôleur principal qui est mis en œuvre au moyen d'un circuit intégré, IC, en particulier un microcontrôleur.

11. Dispositif de commande (1) selon l'une quelconque des revendications précédentes, dans lequel l'appareil électronique comprend un dispositif d'affichage (19) pour afficher un niveau de sortie audio et/ou une information de canal stockée sur les circuits de contrôleur principal (13) et correspondant respectivement à l'information de canal de niveau de sortie audio lors de la commutation de l'état actif à l'état d'attente.

12. Dispositif de commande (1) selon l'une quelconque des revendications 3 à 11, dans lequel les circuits de contrôleur d'attente (3) sont configurés pour recevoir des signaux depuis une télécommande (21) pendant que le dispositif électronique est dans l'état d'attente et/ou pendant que les circuits de contrôleur principal (13) sont dans la phase d'amorçage de l'état actif.

13. Dispositif de commande (1) selon l'une quelconque des revendications 3 à 12, dans lequel les circuits de contrôleur d'attente (3) sont configurés pour fournir les signaux reçus depuis une télécommande (21) aux circuits de contrôleur principal (13) pendant la phase fonctionnelle de l'état actif ; et
les circuits de contrôleur principal (13) sont configurés pour traiter les signaux reçus depuis la télécommande (21).

14. Appareil de télévision comprenant un dispositif de commande (1) selon l'une quelconque des revendications 1 à 13.
